# EUROPEAN PATENT SPECIFICATION

(11) **EP 1 010 087 B1**
(45) Date of publication and mention of the grant of the patent: **17.08.2005**
(21) Application number: 99932069.0
(22) Date of filing: 29.06.1999
(51) Int. Cl.: G06F 13/10, G06F 9/44

(54) **SECURITY FOR PLATFORM-INDEPENDENT DEVICE DRIVERS**
SICHERHEIT FÜR PLATTFORMUNABHÄNGIGE GERÄTETREIBER
SECURITE POUR PILOTES DE PERIPHERIQUE INDEPENDANTS DE LA PLATE-FORME

(30) Priority: 29.06.1998 US 106912; 29.06.1998 US 106910
(43) Date of publication of application: 21.06.2000
(73) Proprietor: SUN MICROSYSTEMS, INC., Palo Alto, California 94303 (US)
(72) Inventor: SLAUGHTER, Gregory, L., Palo Alto, CA 94306 (US); SAULPAUGH, Thomas, E., San Jose, CA 95120 (US); TRAVERSAT, Bernard, A., San Francisco, CA 94109 (US); SCHMIDT, Jeffrey, A., Boulder Creek, CO 95006 (US)
(74) Representative: Browne, Robin Forsythe, Dr.
(86) International application number: PCT/US1999/014759
(87) International publication number: WO 2000/000901

(56) References cited:
- EP-A- 0 737 917
- WO-A-97/44739
- US-A- 5 309 563
- LEMON S ET AL: "AN OBJECT ORIENTED DEVICE DRIVER MODEL" DIGEST OF PAPERS. COMPCON, XP000566086
- TUGGLE E: "ADVANCED TOPICS IN DEVICE DRIVER DESIGN" PROCEEDINGS OF THE ANNUAL EMBEDDED SYSTEMS CONFERENCE,XX,XX, vol. 2, pages 437-454-453, XP000613123
- PANAGIOTIS KOUGIOURIS: "A DEVICE MANAGEMENT FRAMEWORK FOR AN OBJECT-ORIENTED OPERATING SYSTEM" REPORT OF DEPARTMENT OF COMPUTER SCIENCE,US,URBANA-CHAMPAIGN, IL, page A,I-IX,1-73 XP000505450

## Description

### THE FIELD OF THE INVENTION

The present invention relates to the field of computing, and, more particularly, to computer operating system architecture. Still more particularly, the present invention relates to software, methods and systems that provide access to computer system resources for device drivers. The invention has applications in the fields of electronics and computer science.

### BACKGROUND

A device driver is software used to enable the exchange of data between a computer system (or platform) and a peripheral device that is coupled with the computer system. Usually, the peripheral device functions to provide data input and/or output (I/O) to the computer system. Examples of peripheral devices include keyboards, printers, scanners, network interface and graphics cards, modems, and monitors. In general, device drivers process data being to be sent to or retrieved from the peripheral device by the computer system so that the data is transferred in a format suitable for processing by the peripheral device or computer system.

The intimate association between the device driver and the hardware and software of the both the peripheral device and computer system to which the device is couple has required that device drivers be written in a highly platform-dependent manner. For example, device drivers generally must obtain memory space when called to perform their function. Typically, this requires the allocation of memory space that must be described by the driver. The driver must therefore have specific knowledge about the platform in order to make such a request. Thus, the same peripheral device, *e*.*g*., a printer, will require different version of device (printer) driver software for each platform.

The platform dependence of driver software thus increases the costs of developing platforms and peripherals, as manufactures of peripherals and computer operating systems must provide new versions and updates of driver software for new peripherals, new software platforms, and new operating system releases. Platform-dependent driver technology also increases the cost of maintaining computer systems, especially diverse computer systems deployed over networks, as system managers must obtain and install new and updated device drivers to enable user access to peripheral devices.

Therefore, it would be advantageous to provide device drivers that are platform-independent, *i*.*e*., drivers that do not require information about specific platforms as a prerequisite to operation. Such platform-independent device drivers would be capable of running on any platform, thus greatly reducing the costs and frustrations associated with device driver management.

### SUMMARY OF THE INVENTION

The present invention meets these demands by providing a platform-independent device driver. As discussed below, the platform-independence of the device driver of the invention results from the use of abstract memory objects that allow for the description of memory without actual resource allocation by the computer system. By providing a general, platform-independent means and method for device drivers to request memory, the necessity for the inclusion of highly complex, platform-specific code to enable drivers to request memory is eliminated. Moreover, in some specific aspects, the present invention allows for such allocation in a secure fashion so that data security cannot be breached by rogue drivers. In other specific aspects, the present invention facilitates endianness checking and provides allocated memory that has the appropriate endianness for the device driver.

According to one aspect, the present invention provides an apparatus for allocating computer memory to a platform-independent device driver, comprising: a bus manager configured to process requests for allocation of said computer memory from a device driver; a platform-independent device driver configured to generate requests for computer memory allocation using an abstract address space of said computer memory; a mechanism for verifying the identity of said device driver; and a mechanism for allocating said computer memory in response to said request.

In one embodiment, the verification comprises locating the device driver in a system database that associates the device driver with the bus manager. In another embodiment, the inner class is generated and the verification is performed when a system loader loads the driver. In still another embodiment, a plurality of such inner class bus managers are provided for a plurality of device drivers. The inner class bus managers are provided unique assignments to the device drivers to create a one-to-one correspondence between the device drivers and inner class bus managers. Yet, because the inner class bus managers provide the same methods for processing memory allocation requests as the outer class bus manager, each device driver thinks it is communicating with the outer class bus manager. Thus, special coding is not required beyond a knowledge of the outer class bus manager.

In another aspect, the present invention provides a computer-readable medium containing computer-readable program code devices for allocating memory resources in a computer, said computer-readable program code devices being configured to cause a computer to execute the steps of: providing a bus manager configured to respond to requests for memory allocation from a device driver using an abstract address space representation of said computer memory; providing a platform-independent device driver configured to generate requests for memory allocation in terms of said abstract address space representation of said memory; generating a request for memory allocation from said device driver to said bus manager; generating an inner class representation of said bus manager in response to said generated request; verifying the identity of said device driver; and processing said request using said inner class bus manager.

In yet another aspect, the present invention provides a computer data signal on a carrier wave containing computer-executable instructions for allocating memory resources in a computer, said instructions being configured to cause a computer to execute the steps of: providing a bus manager configured to respond to requests for memory allocation from a device driver using an abstract address space representation of said computer memory; providing a platform-independent device driver configured to generate requests for memory allocation in terms of said abstract address space representation of said memory; providing an inner class representation of said bus manager configure to process memory allocation requests from said device driver; generating a request for memory allocation from said device driver to said bus manager; generating an inner class representation of said bus manager in response to said generated request; verifying the identity of said device driver; and processing said request using said inner class bus manager.

In still yet another aspect, the present invention provides a method for allocating memory resources in a computer, the method comprising: providing a bus manager configured to respond to requests for memory allocation from a device driver using an abstract address space representation of said computer memory; providing a platform-independent device driver configured to generate requests for memory allocation in terms of said abstract address space representation of said memory; generating a request for memory allocation from said device driver to said bus manager; generating an inner class representation of said bus manager in response to said generated request; verifying the identity of said device driver; and processing said request using said inner class bus manager.

These and other aspects and advantages of the present invention will become more apparent when the Description below is read in conjunction with the accompanying Drawings.

### BRIEF DESCRIPTION OF THE DRAWINGS

Figure 1 is a schematic illustration of a computer system, or "platform", in accordance with the present invention.
Figure 2 is a diagram illustrating an object-oriented operating system in accordance with an embodiment the present invention, such as JavaOS from Sun Microsystems, Inc. (Mountain View, CA).
Figure 3 is a diagram illustrating an arrangement of device drivers, bus managers, and a platform manager coupled to a bus in accordance with an embodiment of the present invention.
Figure 4 is a diagram illustrating a memory object hierarchy in accordance with an embodiment of the present invention.
Figure 5 is a flow chart illustrating the operation of memory allocation for a device driver in accordance with an embodiment of the present invention.
Figure 6 is a flow chart illustrating step *508* of Figure 5 in greater detail.
Figure 7A and Figure 7B illustrate the nominal and actual relationships among a Bus Manager, Inner Class Bus Managers associated with the Bus Manager, and Device Drivers assigned to the Bus Manager in accordance with one embodiment of the invention.
Figure 8 is a flow chart illustrating the allocation of system resources to a device driver in a secure fashion.
Figure 9 is an illustration of a Java System Database entry in accordance with one embodiment of the invention.
Figure 10 is a flow chart illustrating step *804* of Figure 8 in greater detail.
Figure 11 is a flow chart illustrating a method for handling changes in endianness in accordance with an embodiment of the invention.

### DESCRIPTION OF SOME SPECIFIC EMBODIMENTS

The present invention includes software, methods, and apparatus that provide platform-independent device drivers. According to one embodiment of the invention, described in greater detail below, a device driver that is configured only for a specific bus architecture is provided. The device driver obtains memory by requesting memory objects from a bus manager configured for the same bus architecture as the device driver. The request from the device driver is made by specifying a memory descriptor object, which specifies abstract addresses of memory with respect to an abstract address space managed by the driver is bus manager. However, the memory descriptor object does not have any real system memory resources allocated to it. The bus manager and a platform manager allocate a real memory object, which does have real system memory resources allocated to it, in a real memory address space for the driver. The memory resources allocated correspond to the abstract addresses specified by the memory descriptor. The bus manager may also be coupled with one or more additional that are arranged intermediate the bus and the platform managers. Thus, the device driver of the invention requires no "knowledge" of (*i.e.,* no specific configuration for) the platform on which it operates beyond a knowledge of the bus architecture used by the platform.

### 5.1 Introduction

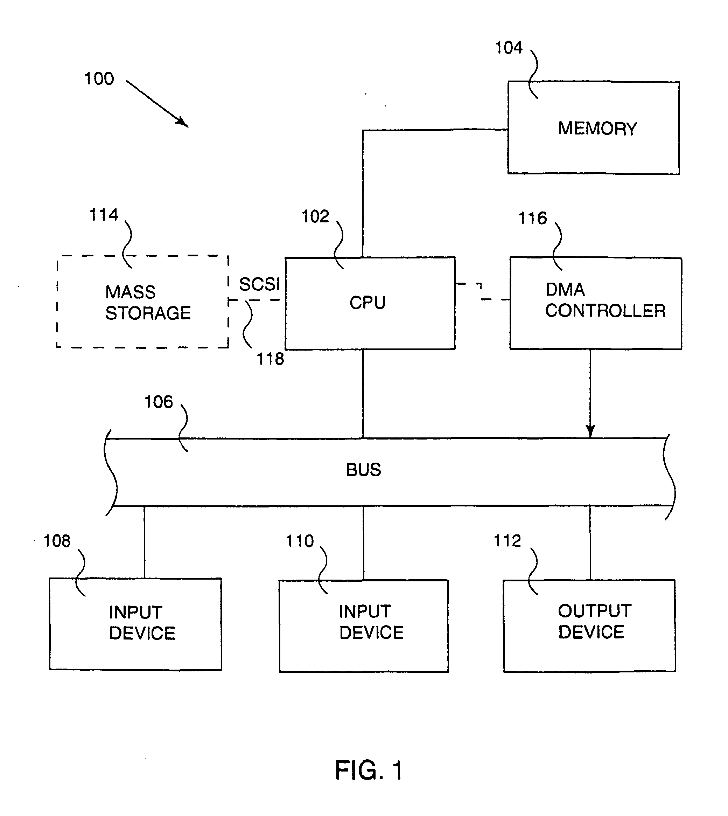

Figure 1 shows an example of a computer system *100* suitable for implementing the present invention. Computer system *100* includes a central processing unit (CPU) *102,* such as, for example, a Sun Microsystems SPARC, Motorola PowerPC, or Intel Pentium processor. CPU *102* is coupled in turn with memory *104*. Memory *104* can include any type of memory device used in a computer system, including random access memory (RAM) and read-only memory (ROM). CPU *102* is also coupled with a bus *106*, such as a PCI bus, or an S bus. A variety of input devices *108* and *110*, and output devices *112* are also coupled with bus *106.* Examples of such input and output devices include, but are not limited to, printers, monitors, modems, and/or network/telephone connections. Typically each of these devices has an associated driver as will be described in further detail below. Thus, for example, input device *108* could be a network interface card that connects computer system *100* to a local area network (LAN), input device *110* could be a keyboard, and output device *112* could be a monitor. CPU *102* can further be coupled to mass storage *114*, such as a hard disk or CDROM drive, and DMA controller *116*. The connection between CPU *102* and mass storage *114* can be over a second bus *118*, such as a small computer system interface (SCSI) bus.

Although computer system *100* has been illustrated using a certain configuration of hardware elements, it will be appreciated that the invention is not limited to operation on such configurations alone. Thus, computer system *100* is representative of computer systems in general terms and includes a wide variety of computing devices including, but not limited to, personal computers, mainframe or minicomputers, and smart systems such as set-top boxes used to access high definition television, cable, or satellite transmission as well as cellular telephones. Still more examples of computer systems suitable for use with the present invention will be apparent to those of skill in the computer science and electronics arts.

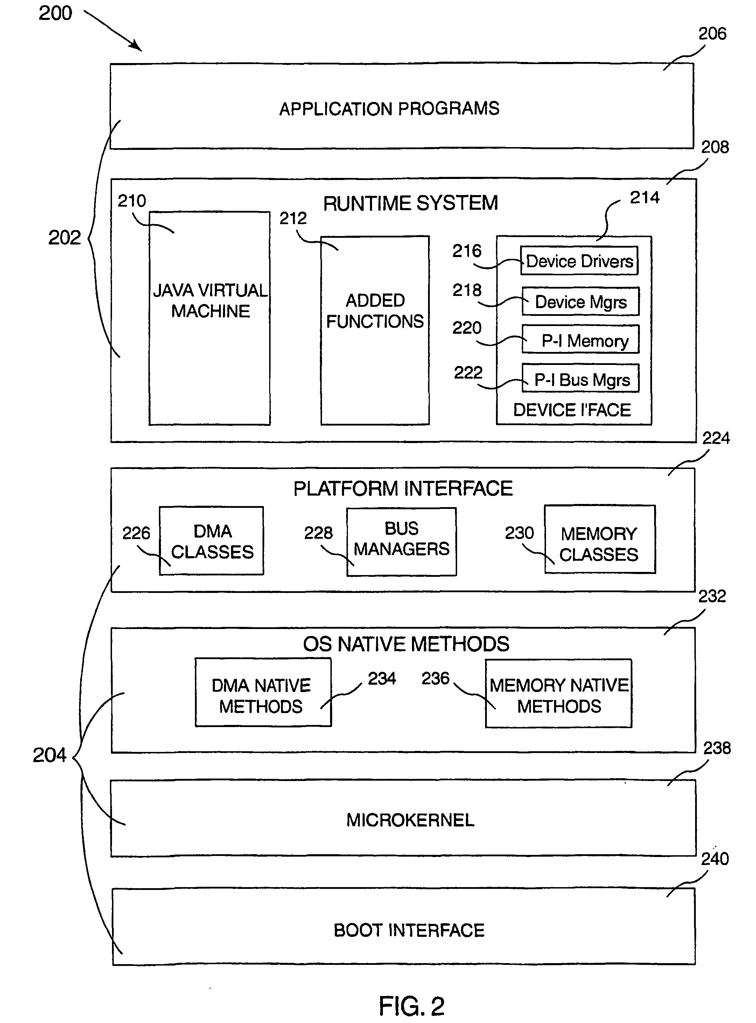

Figure 2 illustrates at *200* an example of software, such as stored in memory *104* and/or running on CPU *102*, arranged in a series of layers. The two upper-most layers *202* include software that is platform-independent, i.e., software that is not specially configured to run on a particular computer system but that can be run on any of several computer systems. The remaining lower layers *204* are platform-dependent software, i.e., software that must be written especially for a particular computer system.

Layers *202* include an applications layer *206*. Layer *206* includes software applications that are commonly run by computer users. Such software includes word processors, graphics programs, database programs, and desktop publishing programs. These applications run in conjunction with runtime system *208*. Runtime system *208* includes, in one embodiment, a Java Virtual Machine (JVM) *210* that receives instructions in the form of machine-independent bytecodes produced by the application running in applications layer *206* and interprets the instructions by converting and executing them. Other types of virtual machine can be used with the present invention, however, as will be apparent to those of skill in the computer science and electronics arts.

Runtime system *208* further includes a set of additional functions *212* that support facilities such as I/O, network operations, graphics, printing, and the like. Also included with runtime system *208* is device interface *214* that supports the operation of buses *106* and *118*, and devices *108, 110,* and *112*. Device interface *214* includes device drivers *216*, which are object-oriented programs written to support the various devices coupled with computer system *100* such as devices *108, 110,* and *112*; device managers *218*, platform-independent memory *220*, and platform-independent bus managers *222* that support buses *106* and *118*. Thus, it will be appreciated that device drivers *216* and bus managers *222* can be used with any platform, including platforms yet to be developed. Other various managers and components (not shown) are typically provided with device interface *214* and will be known among those skilled in the computer science and electronics arts.

Platform-dependent layers *204* include platform interface *224* that contains DMA classes *226*, bus managers *228,* and memory classes *230* in addition to other facilities that support runtime system *208.* Additional functions are also included in platform interface *224* including interrupt classes (not shown) to support computer system *100*. In one embodiment, these classes, managers, and functions are written in the Java programming language. Additional details about these features can be found in the above-referenced, co-pending U.S. Patent Application Serial No. 09/048,333.

OS native methods *232* includes DMA native methods *234* and memory native methods *236* that are written in a language specific to CPU *102* (and thus are native). These methods interface with microkernel *238*. Finally, at the lowest layer is boot interface *240* that supports *inter alia* the loading and initialization of software into memory when computer system *100* is started. Additional details about these features can be found in the above-referenced, co-pending U.S. Patent Application Serial No. 09/048,333.

### 5.2 Allocation of Device Driver Memory

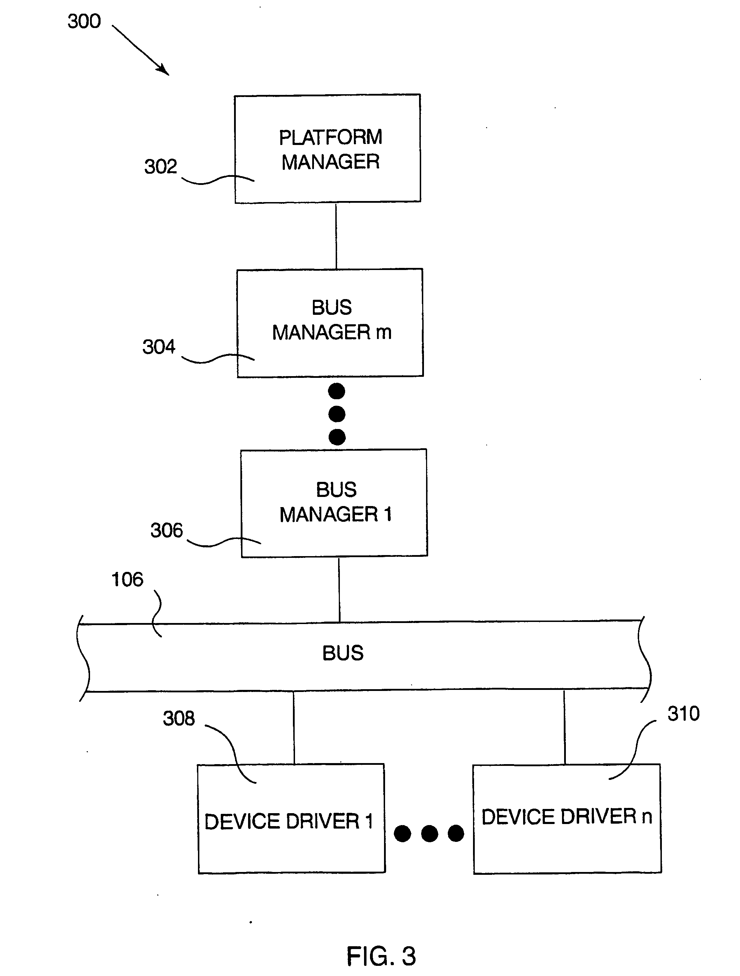

The relationship among the platform-independent bus managers *222* and device drivers *216* is illustrated in greater detail in Figure 3 at *300*. There, platform manager *302* sits atop a hierarchy of *m* bus managers for *m* buses, including Bus Manager 1 at *304* through Bus Manager *m* at *306.* Bus Manager 1 is coupled with bus *106* which is coupled to each of *n* device drivers for *n* devices, shown generally as Device Driver 1 *308* through Device Driver n *310*. Alternatively, only one bus manager and one device driver could be coupled to bus *106*. Platform Manager *302* functions to allocate real memory (*i*.*e*., physical memory such as port I/O memory, virtual memory, or DMA memory) as opposed to abstract memory. Bus managers *304* and *306,* and drivers *308* and *310* function generally as described and above. One embodiment of the invention in which the communication between drivers *308* and *310* through bus managers *304* and *306* to platform manager *302* to allocate memory for the device drivers in platform-independent manner will now be described.

According to one aspect of the present invention, a method, system, and software for allocating memory to a platform-independent device driver are provided in which a platform-independent device driver specifies its request for the allocation of memory in terms of an abstract address space associated with a bus manager. The bus manager receives the request and then translates the request from the bus manager is abstract address space to either a higher bus manager's abstract address space, if a hierarchy of bus managers is present, or to the highest-level bus manager, the platform manager, which uses a real address space. When the request reaches the platform manager, real memory is allocated and the requested addresses are passed back to the device driver via the lower-level bus manager(s). Thus, the device driver is not required to communicate with the platform manager in terms of real memory that would necessitate platform-dependent coding of the device manager. Rather, by communicating with the platform manager via bus manager(s), the device driver can process its request for memory allocation in terms of a single bus manager's abstract address space, which is platform independent.

In one embodiment, the above-described communication is performed using a hierarchical abstract memory object class and related sub-classes provided by the Java programming language. These class and sub-classes are described in detail in the above-referenced, co-pending U.S. Patent Application Serial No. 09/048,333. It will be appreciated, however, that the methods, systems, and software described herein can be enabled using any similar programming language using techniques known to those of skill in the computer science arts.

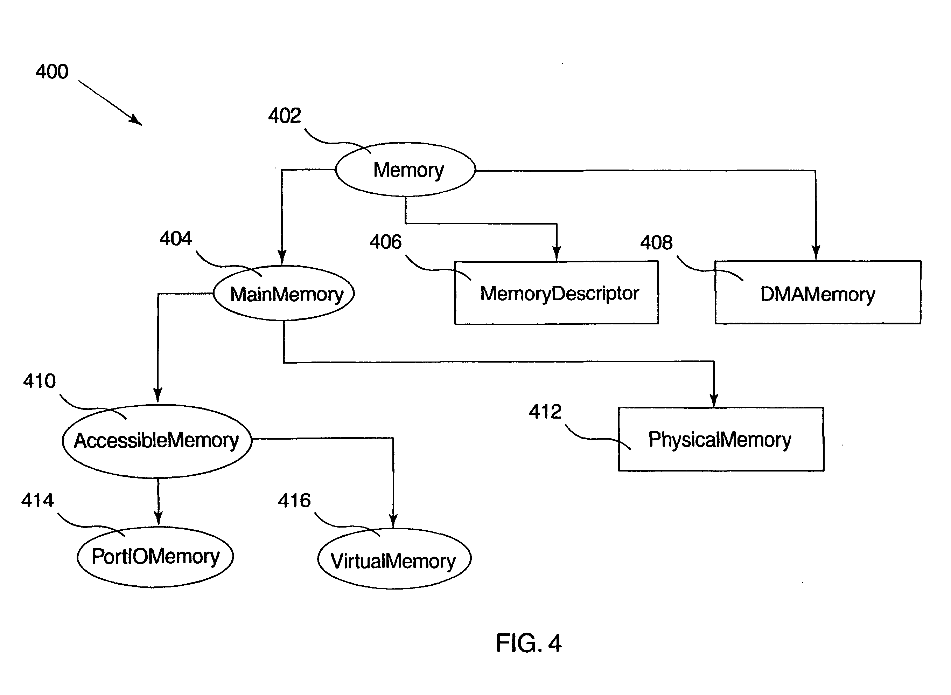

Referring now to Figure 4, the above-described hierarchy of abstract (non-instantiable) and instantiable memory classes and is illustrated in greater detail at *400.* Hierarchy *400* is headed by *Memory* abstract class *402.* This class includes only the general attributes of a *Base Address, Length,* and *Constraints,* each of which attributes are also objects. The *Base Address* and *Length* attributes are those known in the computer science arts. The *Constraints* attribute holds various memory allocation and access constraints. The abstract sub-class *MainMemory 404* and instantiable sub-classes *MemoryDescriptor 406* and *DMAMemory 408* inherit directly from *Memory.*

*MainMemory 404* is an abstract class that includes with those attributes inherited from *Memory 402* abstract methods for managing caching that are ultimately implemented in the instantiable classes *PhysicalMemory 412, PortIOMemory 414,* and *VirtualMemory 416.* The latter two classes inherit from *MainMemory* through the abstract class *AccessibleMemory 410* that also inherits from *MainMemory*. Cache management methods are necessarily platform-specific; however, by using the abstract class *MainMemory*, those platform-specific memory management functions can be accessed in a platform independent manner. In one embodiment, *AccessibleMemory* contains only platform-independent methods and is passed from bus managers to drivers. Drivers also are configured to use only the platform-independent methods in *MainMemory* and *Memory.* The platform-specific methods in *PhysicalMemory, PortIOMemory, VirtualMemory,* and *DMAMemory* are used by the bus manager, which has platform-specific information, to allow the driver to access memory in a platform-independent manner as described below.

*MemoryDescriptor 406* is a non-abstract class that includes the objects *AddressSpace* and *DevInfo* in addition to the *Base, Length,* and *Constraint* objects inherited from *Memory. AddressSpace* includes bus-specific information and methods on the abstract address space used by the bus manager. *DevInfo* holds bus-specific information obtained from the bus manager and includes methods that allow the device driver to choose the correct *MemoryDescriptor* object from an array of such objects as described below. *DMAMemory 408* provides methods for establishing DMA mappings to physical memory and for performing the corresponding unmapping. Thus, device drivers can use *DMAMemory* objects to obtain a base address to pass to DMA controller *116* in a platform-independent manner.

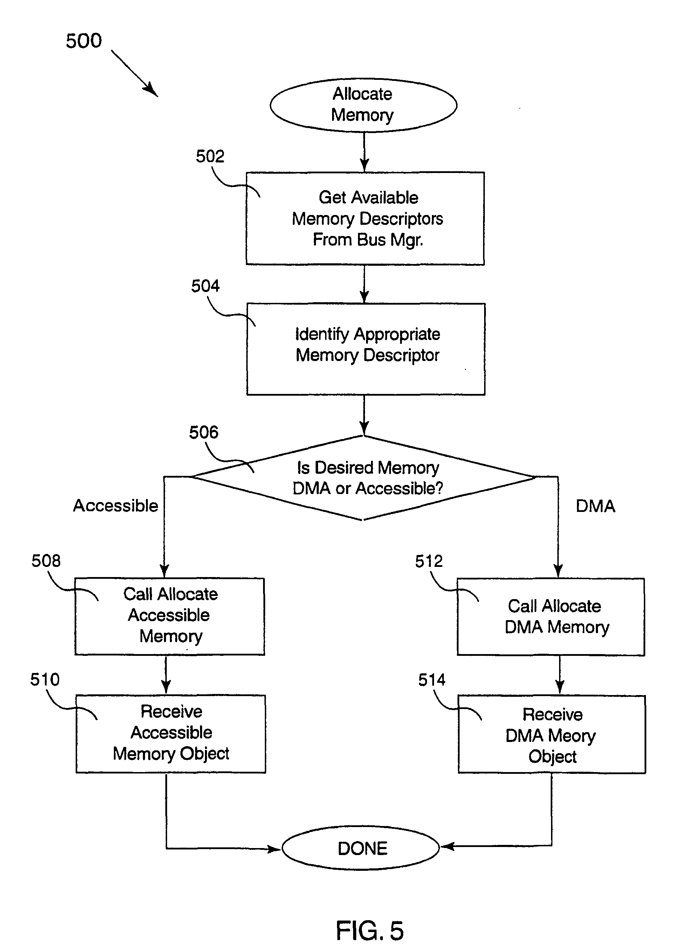

One embodiment of a method by which the above-described drivers, managers, and objects function together to provide platform-independent drivers is described with respect to Figure 5 at *500*. At step *502* the device driver passes a request for memory allocation to the lowest-level bus manager. The bus manager creates an array of *MemoryDescriptor* objects that may be used by the device driver. The number of *MemoryDescriptor* objects in the array will depend on the number of types of memory object that the particular device driver may wish to allocate. That is, in the described embodiment, the list only contains *MemoryDescriptor* objects that the device driver may actually have a need to use. Although in theory, any number of *MemoryDescriptor* objects may be utilized by a particular device, in practice the number is typically quite small. Each of the entries in the *MemoryDescriptor* objects includes platform-dependent information in the *AddressSpace* and *DevInfo* object fields. The array may also be a "read-only" array, so that the device driver cannot modify the *MemoryDescriptor* objects. The array may be constructed in a variety of ways. In one embodiment, the JavaOS operating system is used and the bus manager constructs the array by first contacting the Java System Loader which creates a list of all associated *MemoryDescriptor* objects at start-up. In another embodiment, the array is constructed at the time the device driver is loaded. At step *504* the device driver uses the information contained in the *DevInfo* object field to identify the appropriate *MemoryDescriptor* object. In one embodiment, the device driver uses the information stored in the *Base*, *Length,* and *AddressSpace* object fields to select the appropriate *MemoryDescriptor* object. In another embodiment, the device driver uses the information stored in the *Base, Length, AddressSpace,* and *DevInfo* object fields to select the appropriate *MemoryDescriptor* object.

Having determined the appropriate *MemoryDescriptor* object, at step *506* different memory allocation pathways are taken depending upon whether the desired memory is accessible memory or DMA memory. If accessible memory is desired, then flow then moves to step *508* wherein accessible memory is allocated by the platform manager and the addresses are provided to the *MemoryDescriptor* object in the object's *AddressSpace* field. In step *510* the *MemoryDescriptor* object containing the real memory addresses (or a reference to that object, such as an object reference) is received by the device driver for processing by the driver. Alternatively, if the memory to be allocated is DMA memory, then control moves to step *512* wherein DMA memory is allocated, and, at step *514*, an appropriate memory object (or object reference) is received by the device driver.

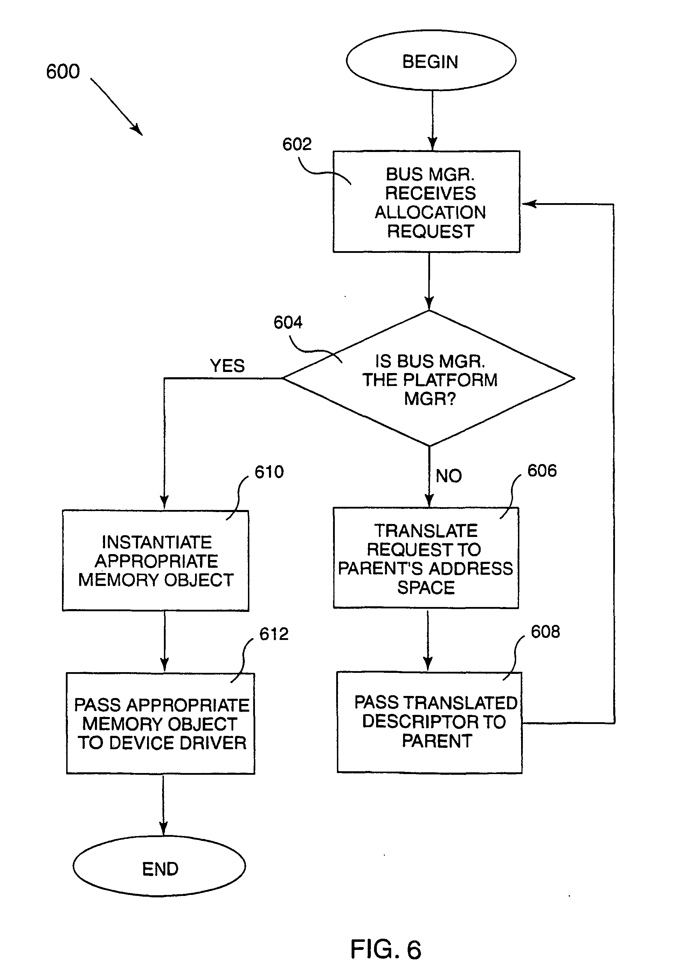

The details of steps *508* and *512* that follow from the determination at step *506* are largely identical, except for the details of allocating accessible or DMA memory, and will be discussed together with respect to Figure 6 at *600.* Starting at step *602,* the bus manager receives the allocation request from the device driver. In one embodiment, the device driver also selects the appropriate *MemoryDescriptor* object. At step *604* the bus manager determines whether it is the highest-level bus manager, *i*.*e*., the platform manager. If the bus manager is not the platform manager (*i*.*e*., the answer at query *604* is no), then, at step *606,* the bus manager translates the addresses in the *MemoryDescriptor* object to comport with the requirements of the higher-level bus manager. At step *608* the translated *MemoryDescriptor* object is passed to the next higher-level bus manager and the loop is repeated at step *604.* The loop may be repeated several times, once for each bus manager intermediate between the first bus manager and the platform manager. It should be appreciated that the step of determining whether a particular manager is a bus manager or a platform manager would be inherent to the manager, and so there would typically not be an actual check. Rather, the step is described only to facilitate an understanding of the operation of the invention.

In step 606, when the bus manager translates the addresses in the MemoryDescriptor object to comport with the requirements of the higher-level bus manager, the addresses inside the AddressSpace object are not translated. Rather it is the addresses inside of the MemoryDescriptor object which are translated. In a more specific example, when bus manager gets a MemoryDescriptor (referred to in this example as "MD1") the MemoryDescriptor object contains a base address "BA1", and a base length "BL1" (since MemoryDescriptor is a sub-class of Memory, see above). These addresses are all addresses of the abstract address space used by the bus manager (referred to in this example as "AS1"). The bus manager translates these addresses to a new address space ("AS2") of a translated MemoryDescriptor object ("MD2")when passing the request to a second bus manager for an address space managed by that bus manager. Thus BA1, as an address in the address space AS1, is translated to BA2 of the address space AS2 (similarly for BL1). This continues until the platform manager is reached and where the address space is a real address space of the platform.

A more concrete example is provided here. A device driver is written for a PCI bus which has no intervening bus manager between the PCI bus manager and the platform. The driver requests memory specifying address 0x300 of the "config" address space of the PCI bus. The PCI bus manager knows that config happens to start at port 0x2000 and is mapped 1-to-1, so it translates 0x300 of the config address space to 0x2300 of the "port I/O" address space. On a SPARC platform, the 0x300 address would still be requested by the device driver (which is platform-independent), but this time the bus manager would know that the config address space is mapped to physical address 0x14000, and so the translation would be to 0x14300 of the physical memory address space.

If the bus manager called by the device driver is the platform manager, or when the translated *MemoryDescriptor* object reaches the platform manager, then, at step *610*, the platform manager allocates real memory addresses. The addresses allocated are accessible memory addresses if the choice of *MemoryDescriptor* object is consistent with an affirmative answer at step *506*. Otherwise, the addresses allocated are DMA addresses. In either case, the platform manager passes the appropriate memory object (*AccessableMemory or DMAMemory*), to the next lowest bus manager, and so on until the *MemoryDescriptor* object is passed to the device driver. If there is no bus manager hierarchy, then the *MemoryDescriptor* object is passed directly to the device driver. The driver then performs its functions as designed using the real memory addresses obtained by using the indirect address request process just described.

The use of the above-described *MemoryDescriptor* object as a means of allocating memory provides two advantages. First, *MemoryDescriptor* objects are memory objects in an abstract address space. This address space does not really exist on the platform, but only in the world of the bus manager. Thus, memory resources that can be allocated can also be fully characterized; yet, no system resources need be allocated. Second, *MemoryDescriptor* object, being sub-classes of *Memory*, appear to the device driver to be very similar in form to the memory objects (*i.e., AccessibleMemory* or *DMAMemory*) that will eventually be allocated to the device driver. This similarity simplifies driver design.

### 5.3 Secure Allocation of Device Driver Memory

In some cases, it is desirable to implement the above-described allocation of device driver memory, or any other calls from a device driver to a bus manager (e.g., for other system services such as connecting, disconnecting, or interrogating interrupts) in a secure way. This is especially important where network-based drivers, such as drivers written in Sun Microsystems' Java programming language, are available from parties other than the operating system developer. For example, it may be desirable to prevent a rogue device driver from identifying itself to a bus manager as another, legitimate driver. This could be useful to improve system robustness, e.g., by allowing the system to identify and isolate corrupted device drivers and thus avoid system crashes. Such a security mechanism could also be useful to prevent spoofing device drivers from erasing, altering, and/or copying sensitive data from the system surreptitiously. By way of example, a malicious spoofing device driver could masquerade as a printer driver and copy the data to be printed to a remote location.

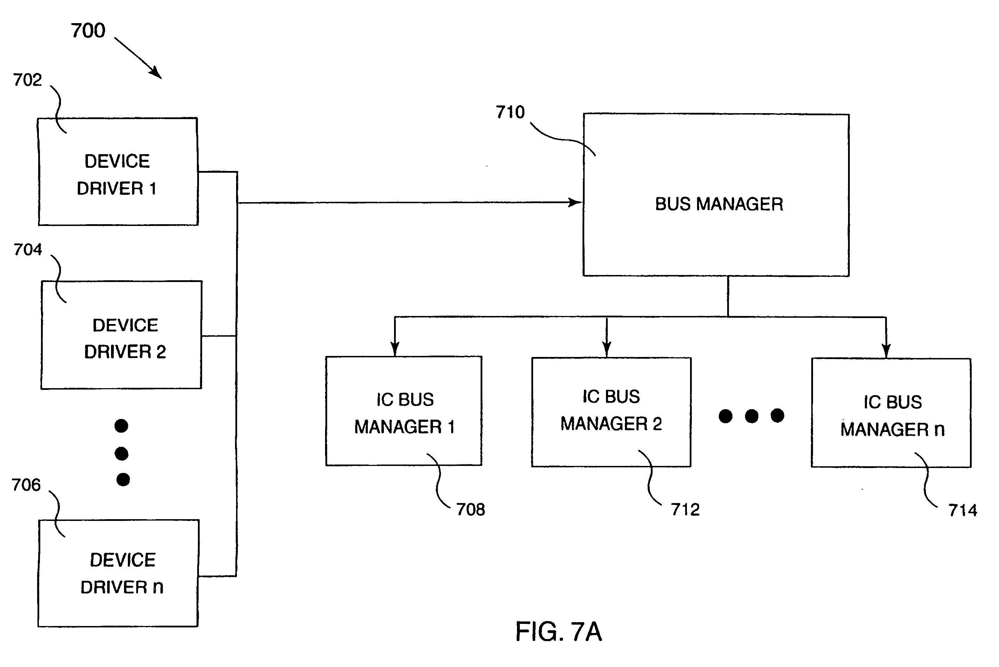

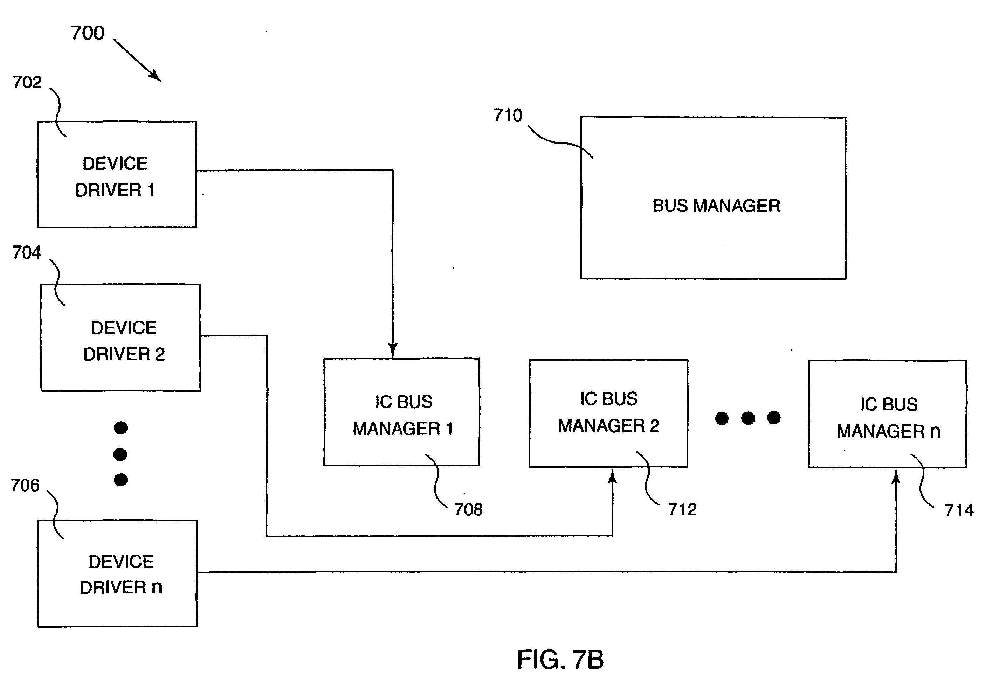

One embodiment of such a security mechanism provided by the present invention is illustrated with respect to the device driver/bus manager architecture illustrated in Figures 7A and 7B. Figure 7A shows a series of device drivers Device Driver 1 *702,* Device Driver 2 *704,* Ö , Device Driver n *706,* respectively. The device drivers are each assigned nominally to communicate with Bus Manager *710*, which, in turn, is associated with a series of Inner Class (IC) Bus Managers IC Bus Manager 1 *712*, IC Bus Managers 2 *714*, Ö , and IC Bus Manager n *716*, *i.e.,* each IC Bus Manager is an inner class instantiation of Bus Manager *710* and inherits all of the methods of Bus Manager *710*. Each IC Bus Manager is assigned to one, and only one, of the Device Drivers, and appears to its assigned Device Driver as Bus Manager *710*. Thus, the actual flow of communication between each of the Device Drivers and its uniquely associated IC Bus Manager is illustrated in Figure 7B. By using a secure method for assigning each Device Driver to each IC Bus Manager, the present invention avoids the problems of errant or rogue Device Drivers as such drivers cannot gain access to system resources.

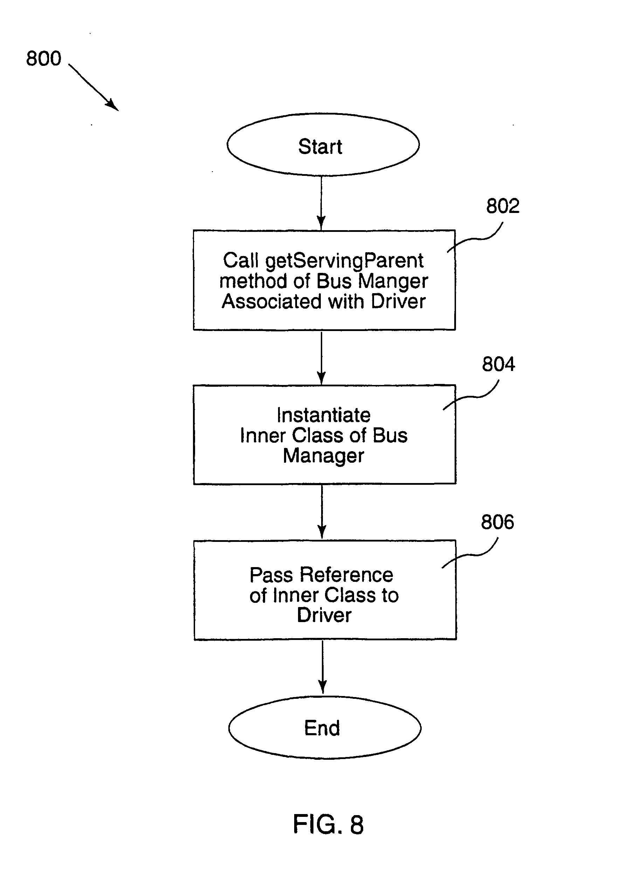

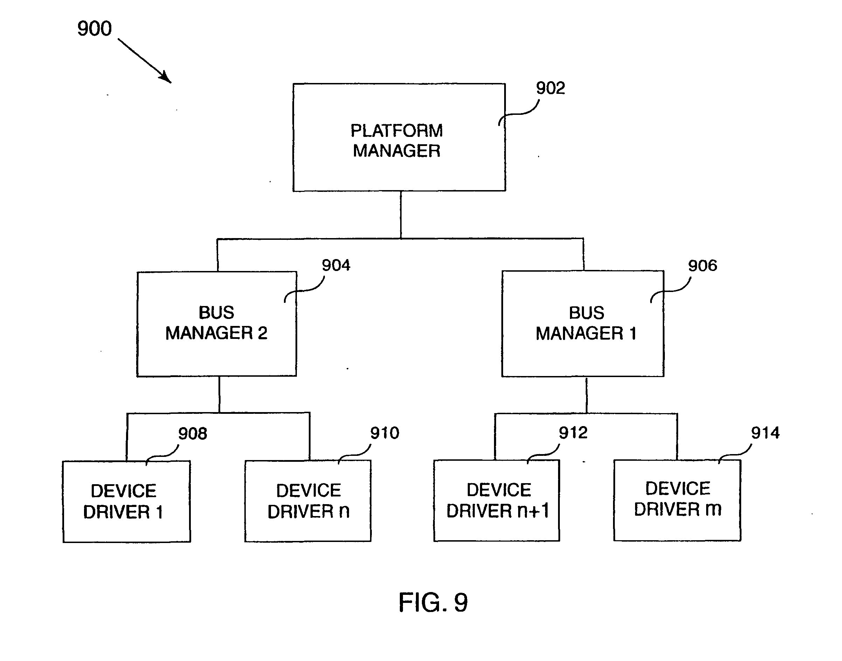

One embodiment of a method for providing the above-described secure bus manager support is shown in Figure 8. The method described in this embodiment includes the use of procedures and facilities supported by JavaOS, but equivalent procedures and facilities for other operating systems will be apparent to those of skill in the computer science arts. As shown at *800*, in a first step *802*, when the device driver is loaded by the Java System Loader (JSL), the device drivers object reference is passed to the bus manager assigned to service the device driver. The bus manager method getServingParent is called and passed the device drivers object reference. The device drivers object reference and bus manager assignment is determined by the JSL which walks down a device tree constructed by the Java System Database (JSD) as illustrated in Figure 9 at *900*. There, an example tree includes an entry for Platform Manager *902* which has a parent relationship with Bus Manager 2 *904* and Bus Manager 1 *906*. Bus Manager 2 has itself a parent relationship with the device drivers Device Driver 1 *908*, Ö , Device Driver n *910*. Bus Manager 1 has itself a parent relationship with the device drivers Device Driver n+1 *912,* Ö , Device Driver m *912*. In this way, each registered device driver is assigned to an appropriate bus manager.

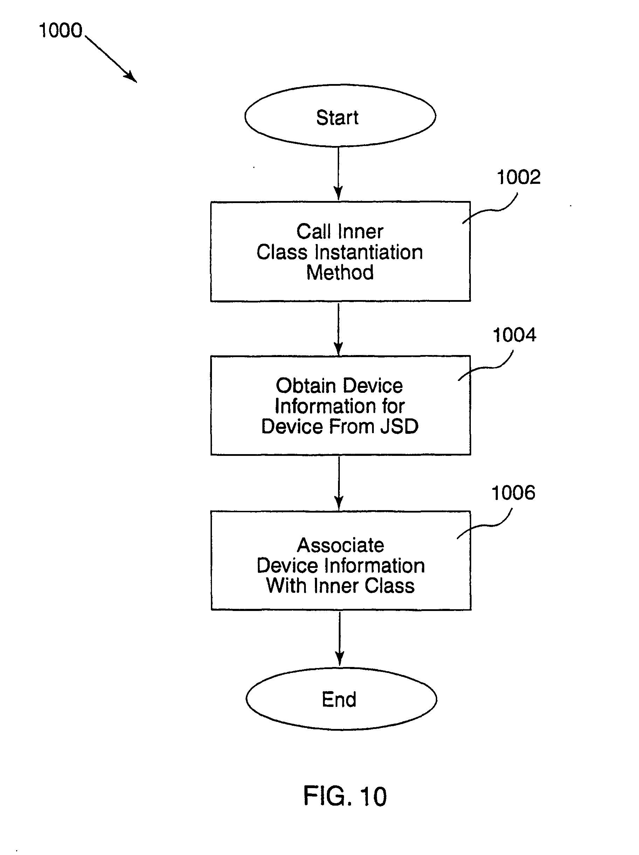

Returning to Figure 8, at step *804*, the IC bus manager is constructed. This step is illustrated in greater detail in Figure 10 at *1000*. Having obtained the object reference for the device driver, the inner class of the bus manager is instantiated at step *1002* by a call to the Inner Class construction method of the bus manager. The object reference for the assigned device driver is passed to the constructor of the IC bus manager, and, at step *1004*, information regarding the device driver is obtained from the JSD using the device drivers object reference. At step *1006* this information is copied to a container object available in the IC bus manager to associate the IC bus manager with the device driver.

Returning once again to Figure 8, at step *806* an object reference to the IC bus manager just constructed is passed to the device driver. The device driver, however, functions as if is was connected to the bus manager directly. Thus, by using inner class representations of the bus manager and making reference to the JSD for information on the device driver only those device drivers known to be associated with devices registered with the JSD can gain access to system resources. An additional level of security can be provided by forcing the device driver to choose the appropriate *MemoryDescriptor* object from a read-only list of such objects made available to the device driver by the bus manager.

### 5.4 Handling Endianness

The above-described embodiments for providing platform-independent, secure device drivers must also account for situations in which a device driver must access memory of a certain endianness from a platform manager of the opposite endianness. Even more complex are systems having a multiple, hierarchical bus managers, such as illustrated in Figure 3 as described above. In such situations, the device driver must be configured to account for its endianness requirements, the endianness of each bus manager, and the endianness of the platform manager so that the memory can be swapped or unswapped as necessary. Such an arrangement, however, requires a platform-dependent device driver. The present invention overcomes this limitation as will be described presently.

In one embodiment, the present invention includes a *MemoryConstraints* object that is passed from the device driver to the bus manager (or, the instantiated inner class thereof). In one embodiment, the *MemoryConstraints* object is the *Constraints* object field of the *MemoryDescriptor* object that is used to process the memory allocation request of the device driver as described above. However, it will be appreciated that a separate object can be used. Therefore, the discussion below will refer to a *MemoryConstraints* object generally. The *MemoryConstraints* object includes at least two object fields, an Endianness Variable field and a Swapped field. The Endianness Variable field indicates to the bus manager whether the endianness of the passing object is big or little. For big endian, the most significant byte is stored in the lowest address of memory. For little endian the least significant byte is stored in the lowest address of memory. The Swapped variable is a Boolean to indicate whether the endianness of the *MemoryConstraints* object has been swapped previously. Other allocation and access constraints can be included with the *MemoryConstraints* object if desired.

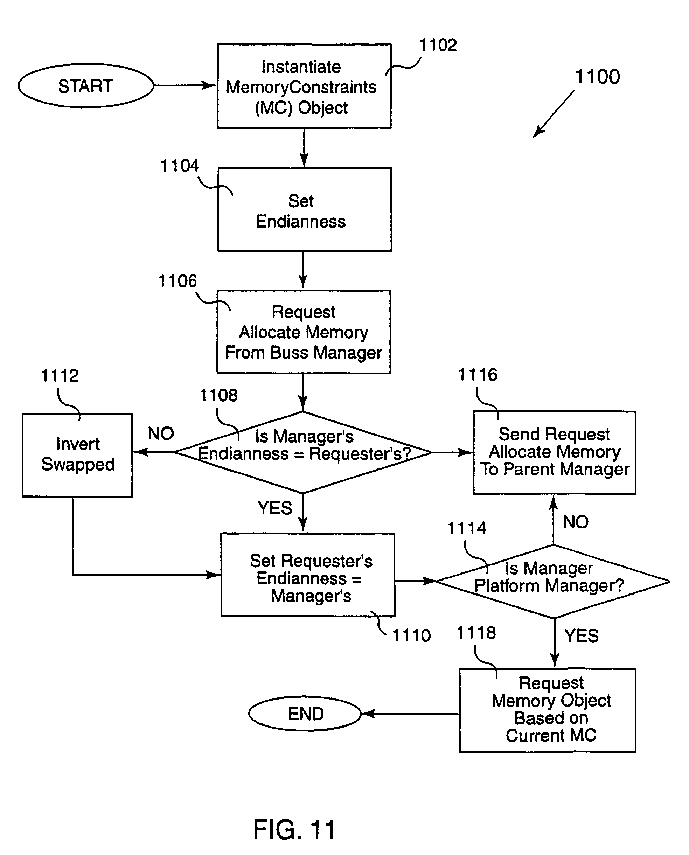

The use of the *MemoryConstraints* object to account for changes in endianness in the allocation of memory for a device driver is illustrated in Figure 11 at *1100*. There, starting at *1102*, the device driver instantiates a *MemoryConstraints* object and sets the default value of Swapped to False. Next, at step *1104*, the endianness for the driver is set to a value corresponding to a big or little. The *MemoryConstraints* object is then passed to the appropriate bus manager as part of a call by the device driver for accessible memory at step *1106*.

At step *1108* the endianness of the bus manager is compared to the value provided in the *MemoryConstraints* object passed by the device driver. If the values are the same, then, at step *1110*, the endianness will be that of the bus manager, and the value of Swapped will be unchanged. If the endianness stored in the *MemoryConstraints* object is different from the bus manager's, the endianness will be that of the bus manager, and the value of Swapped will be inverted at step *1112*.

Next, at step *1114*, a determination is made whether the bus manager is the highest-level bus manager in the hierarchy (i.e., the bus manager is the platform manager). If the bus manager is not the highest-level manager, then a request for accessible memory is sent to the next-higher manager at step *1116* and the flow returns to step *1108* as described above. Thus, the *MemoryConstraints* object will be passed up the hierarchy of bus managers, having the Endianness Variable and Swapped object fields changed as described above, until the platform manager is reached. When the platform manager is reached, then, at step *1118* accessible memory is allocated using the current status of the fields in the *MemoryConstraints* object. The memory will be allocated as described above. Importantly it will be appreciated that the method described herein provides an allocation of accessible memory having the appropriate endianness without requiring the device driver to be platform-dependent.

### 6. CONCLUSION

Thus, the described inventions provide methods, software, and systems for platform-independent device drivers. Such device drivers can be run in a secure fashion as described above and allow greater flexibility and reduced costs of construction and maintenance. Although certain embodiments and examples have been used to describe the present invention, it will be apparent to those having skill in the art that various changes can be made to those embodiment, or examples. For example, it will be appreciated from the foregoing that many object oriented operating systems can be used to implement methods, software, and systems described herein using only modifications that will be apparent to those of skill in the computer science arts.

## Claims

1. An apparatus for allocating computer memory to a platform-independent device driver (702), comprising:
a. a bus manager (710) configured to process requests for allocation of said computer memory from a device driver;
b. a platform-independent device driver (702) configured to generate requests for computer memory allocation using an abstract address space of said computer memory;
c. a mechanism for verifying the identity of said device driver; and
d. a mechanism for allocating said computer memory in response to said request.

2. The apparatus of claim 1, further comprising a mechanism for generating an inner class representation (708) of said bus manager (710).

3. The apparatus of claim 1 or 2, wherein said apparatus further comprises a database that associates each device driver (702) in said apparatus with a bus manager (710).

4. The apparatus of claim 3, wherein said mechanism for verifying the identity of said device driver (702) is configured to search said database for said association between said bus manager (710) and said device driver in conjunction with generating said inner class representation (708) of said bus manager.

5. The apparatus of any of claims 1-4, further comprising an inner class representation (708) of said bus manager (710).

6. The apparatus of claim 5, wherein said inner class representation (708) of said bus manager (710) includes all memory request processing methods of said bus manager.

7. The apparatus of claim 5 or 6, wherein said inner class representation (708) of said bus manager (710) is associated uniquely with said device driver.

8. The apparatus of any of claims 5-7, further comprising a plurality of device drivers (702, 704, 706) and inner class representations of said bus manager (708, 712, 714), wherein each of said plurality of said plurality of said inner class representations of said bus manager is uniquely associated with each of said plurality of device drivers.

9. A computer-readable medium containing computer-readable program code devices for allocating memory resources in a computer, said computer-readable program code devices being configured to cause a computer to execute the steps of:
a. providing a bus manager (710) configured to respond to requests for memory allocation (501) from a device driver (702) using an abstract address space representation of said computer memory;
b. providing a platform-independent device driver (702) configured to generate requests for memory allocation (502) in terms of said abstract address space representation of said memory;
c. generating a request (502) for memory allocation from said device driver to said bus manager;
d. generating (804) an inner class representation (708) of said bus manager in response to said generated request;
e. verifying the identity of said device driver; and
f. processing said request using said inner class bus manager.

10. The computer-readable medium of claim 9, wherein said computer-readable program code devices are further configured to generate (804) an inner class representation (708) of said bus manager (710).

11. The computer-readable medium of claim 10, wherein said inner class representation (708) is generated when said request (502) is made to said bus manager (710), and said inner class representation is assigned uniquely to said device driver (702).

12. The computer-readable medium of claim 11, wherein said verifying is performed by locating the assignment of said device driver (702) to said bus manager (710) on a database store in the operating system of said computer.

13. A computer data signal on a carrier wave containing computer-executable instructions for allocating memory resources in a computer, said instructions being configured to cause a computer to execute the steps of :
a. providing a bus manager (710) configured to respond to requests for memory allocation (502) from a device driver (702) using an abstract address space representation of said computer memory;
b. providing a platform-independent device driver (702) configured to generate requests for memory allocation (502) in terms of said abstract address space representation of said memory;
c. providing an inner class representation (708) of said bus manager configure to process memory allocation requests from said device driver;
d. generating a request (502) for memory allocation from said device driver to said bus manager;
e. generating (804) an inner class representation of said bus manager in response to said generated request;
f. verifying the identity of said device driver; and
g. processing said request using said inner class bus manager.

14. A method for allocating memory resources in a computer, the method comprising:
a. providing a bus manager (710) configured to respond to requests (502) for memory allocation from a device driver (702) using an abstract address space representation of said computer memory;
b. providing a platform-independent device driver (702) configured to generate requests for memory allocation in terms of said abstract address space representation of said memory;
c. generating (502) a request for memory allocation from said device driver to said bus manager;
d. generating (804) an inner class representation (708) of said bus manager in response to said generated request;
e. verifying the identity of said device driver; and
f. processing said request using said inner class bus manager.

15. The method of claim 14, further comprising generating (804) an inner class representation (708) of said bus manager.

16. The method of claim 15, wherein said inner class representation (708) is generated when said request (502) is made to said bus manager (710), and said inner class representation is assigned uniquely to said device driver (702).

17. The method of claim 16, wherein said verifying is performed by locating the assignment of said device driver (702) to said bus manager (710) on a database store in the operating system of said computer.

## Patentansprüche

1. Vorrichtung zum Zuteilen von Computerspeicher zu einem plattformunabhängigen Gerätetreiber (702), umfassend:
a. einen Busmanager (710), der dafür konfiguriert ist, Anforderungen für die Zuteilung des Computerspeichers von dem Gerätetreiber zu verarbeiten;
b. einen plattformunabhängigen Gerätetreiber (702), der dafür konfiguriert ist, Anforderungen für die Zuteilung von Computerspeicher unter Verwendung eines abstrakten Adressraumes des Computerspeichers zu erzeugen;
c. einen Mechanismus zum Verifizieren der Identität des Gerätetreibers; und
d. einen Mechanismus für die Zuteilung des Computerspeichers in Reaktion auf die Anforderung.

2. Vorrichtung nach Anspruch 1, die des Weiteren einen Mechanismus zum Erzeugen einer inneren Klassendarstellung (708) des Busmanagers (710) umfasst.

3. Vorrichtung nach Anspruch 1 oder 2, wobei die Vorrichtung des Weiteren eine Datenbank umfasst, die jeden Gerätetreiber (702) in der Vorrichtung einem Busmanager (710) zuordnet.

4. Vorrichtung nach Anspruch 3, wobei der Mechanismus zum Verifizieren der Identität des Gerätetreibers (702) dafür konfiguriert ist, die Datenbank für die Zuordnung zwischen dem Busmanager (710) und dem Gerätetreiber in Verbindung mit dem Erzeugen der inneren Klassendarstellung (708) des Busmanagers zu durchsuchen.

5. Vorrichtung nach einem der Ansprüche 1 bis 4, die des Weiteren eine innere Klassendarstellung (708) des Busmanagers (710) umfasst.

6. Vorrichtung nach Anspruch 5, wobei die innere Klassendarstellung (708) des Busmanagers (710) alle Speicheranforderungsverarbeitungsverfahren des Busmanagers beinhaltet.

7. Vorrichtung nach Anspruch 5 oder 6, wobei die innere Klassendarstellung (708) des Busmanagers (710) dem Gerätetreiber eindeutig zugeordnet ist.

8. Vorrichtung nach einem der Ansprüche 5 bis 7, die des Weiteren mehrere Gerätetreiber (702, 704, 706) und innere Klassendarstellungen des Busmanagers (708, 712, 714) umfasst, wobei jede der mehreren inneren Klassendarstellungen des Busmanagers jedem der mehreren Gerätetreiber eindeutig zugeordnet ist.

9. Computerlesbares Medium mit computerlesbaren Programmcodeeinrichtungen zum Zuteilen von Speicherressourcen in einem Computer, wobei die computerlesbaren Programmcodeeinrichtungen so konfiguriert sind, dass sie einen Computer veranlassen, folgende Schritte auszuführen:
a. Bereitstellen eines Busmanagers (710), der dafür konfiguriert ist, auf Anforderungen für eine Speicherzuteilung (501) von einem Gerätetreiber (702) unter Verwendung einer abstrakten Adressraumdarstellung des Computerspeichers zu reagieren;
b. Bereitstellen eines plattformunabhängigen Gerätetreibers (702), der dafür konfiguriert ist, Anforderungen für eine Speicherzuteilung (502) anhand der abstrakten Adressraumdarstellung des Speichers zu erzeugen;
c. Erzeugen einer Anforderung (502) für eine Speicherzuteilung von dem Gerätetreiber an den Busmanager;
d. Erzeugen (804) einer inneren Klassendarstellung (708) des Busmanagers in Reaktion auf die erzeugte Anforderung;
e. Verifizieren der Identität des Gerätetreibers; und
f. Verarbeiten der Anforderung unter Verwendung des Busmanagers der inneren Klasse.

10. Computerlesbares Medium nach Anspruch 9, wobei die computerlesbaren Programmcodeeinrichtungen des Weiteren dafür konfiguriert sind, eine innere Klassendarstellung (708) des Busmanagers (710) zu erzeugen (804).

11. Computerlesbares Medium nach Anspruch 10, wobei die innere Klassendarstellung (708) erzeugt wird, wenn die Anforderung (502) an den Busmanager (710) ergeht, und die innere Klassendarstellung eindeutig dem Gerätetreiber (702) zugeordnet wird.

12. Computerlesbares Medium nach Anspruch 11, wobei das Verifizieren in der Weise erfolgt, dass die Zuordnung des Gerätetreibers (702) zu dem Busmanager (710) in einem Datenbankspeicher in dem Betriebssystem des Computers lokalisiert wird.

13. Computerdatensignal auf einer Trägerwelle mit auf einem Computer ausführbaren Befehlen zum Zuteilen von Speicherressourcen in einem Computer, wobei die Befehle so konfiguriert sind, dass sie einen Computer veranlassen, folgende Schritte auszuführen:
a. Bereitstellen eines Busmanagers (710), der dafür konfiguriert ist, auf Anforderungen für eine Speicherzuteilung (502) von einem Gerätetreiber (702) unter Verwendung einer abstrakten Adressraumdarstellung des Computerspeichers zu reagieren;
b. Bereitstellen eines plattformunabhängigen Gerätetreibers (702), der dafür konfiguriert ist, Anforderungen für eine Speicherzuteilung (502) anhand der abstrakten Adressraumdarstellung des Speichers zu erzeugen;
c. Bereitstellen einer inneren Klassendarstellung (708) des Busmanagers, der dafür konfiguriert ist, Speicherzuteilungsanforderungen von dem Gerätetreiber zu verarbeiten;
d. Erzeugen einer Anforderung (502) für eine Speicherzuteilung von dem Gerätetreiber an den Busmanager;
e. Erzeugen (804) einer inneren Klassendarstellung des Busmanagers in Reaktion auf die erzeugte Anforderung;
f. Verifizieren der Identität des Gerätetreibers; und
g. Verarbeiten der Anforderung unter Verwendung des Busmanagers der inneren Klasse.

14. Verfahren für die Zuteilung von Speicherressourcen in einem Computer, wobei das Verfahren Folgendes umfasst:
a. Bereitstellen eines Busmanagers (710), der dafür konfiguriert ist, auf Anforderungen (502) für eine Speicherzuteilung von einem Gerätetreiber (702) unter Verwendung einer abstrakten Adressraumdarstellung des Computerspeichers zu reagieren;
b. Bereitstellen eines plattformunabhängigen Gerätetreibers (702), der dafür konfiguriert ist, Anforderungen für eine Speicherzuteilung anhand der abstrakten Adressraumdarstellung des Speichers zu erzeugen;
c. Erzeugen (502) einer Anforderung für eine Speicherzuteilung von dem Gerätetreiber an den Busmanager;
d. Erzeugen (804) einer inneren Klassendarstellung (708) des Busmanagers in Reaktion auf die erzeugte Anforderung;
e. Verifizieren der Identität des Gerätetreibers; und
f. Verarbeiten der Anforderung unter Verwendung des Busmanagers der inneren Klasse.

15. Verfahren nach Anspruch 14, das des Weiteren das Erzeugen (804) einer inneren Klassendarstellung (708) des Busmanagers umfasst.

16. Verfahren nach Anspruch 15, wobei die innere Klassendarstellung (708) erzeugt wird, wenn die Anforderung (502) an den Busmanager (710) ergeht, und die innere Klassendarstellung eindeutig dem Gerätetreiber (702) zugeordnet wird.

17. Verfahren nach Anspruch 16, wobei das Verifizieren in der Weise erfolgt, dass die Zuordnung des Gerätetreibers (702) zu dem Busmanager (710) in einem Datenbankspeicher in dem Betriebssystem des Computers lokalisiert wird.

## Revendications

1. Appareil pour allouer de la mémoire d'ordinateur à un pilote de dispositif indépendant d'une plate-forme (702), comportant :
a. un gestionnaire de bus (710) configuré pour traiter des requêtes d'allocation de ladite mémoire d'ordinateur provenant d'un pilote de dispositif,
b. un pilote de dispositif indépendant de la plate-forme (702) configuré pour générer des requêtes d'allocation de la mémoire d'ordinateur en utilisant un espace d'adresse abstrait de ladite mémoire d'ordinateur,
c. un mécanisme pour vérifier l'identité dudit pilote de dispositif, et
d. un mécanisme pour allouer ladite mémoire d'ordinateur en réponse à ladite requête.

2. Appareil selon la revendication 1, comportant en outre un mécanisme pour générer une représentation de classe interne (708) dudit gestionnaire de bus (710).

3. Appareil selon la revendication 1 ou 2, dans lequel ledit appareil comporte en outre une base de données qui associe chaque pilote de dispositif (702) dudit appareil à un gestionnaire de bus (710).

4. Appareil selon la revendication 3, dans lequel ledit mécanisme pour vérifier l'identité dudit pilote de dispositif (702) est configuré pour rechercher dans ladite base de données ladite association entre ledit gestionnaire de bus (710) et ledit pilote de dispositif conjointement avec la génération de ladite représentation de classe interne (708) dudit gestionnaire de bus.

5. Appareil selon l'une quelconque des revendications 1 à 4, comportant en outre une représentation de classe interne (708) dudit gestionnaire de bus (710).

6. Appareil selon la revendication 5, dans lequel ladite représentation de classe interne (708) dudit gestionnaire de bus (710) inclut tous les procédés de traitement de requête de mémoire dudit gestionnaire de bus.

7. Appareil selon la revendication 5 ou 6, dans lequel ladite représentation de classe interne (708) dudit gestionnaire de bus (710) est associée uniquement audit pilote de dispositif.

8. Appareil selon l'une quelconque des revendications 5 à 7, comportant en outre une pluralité de modules de commande de dispositif (702, 704, 706) et de représentations de classe interne dudit gestionnaire de bus (708, 712, 714), dans lequel chacune parmi ladite pluralité desdites représentations de classe interne dudit gestionnaire de bus est uniquement associée à chacun parmi ladite pluralité de modules de commande de dispositif.

9. Support lisible par ordinateur contenant des dispositifs à code de programme lisible par ordinateur pour allouer des ressources de mémoire dans un ordinateur, lesdits dispositifs à code de programme lisible par ordinateur étant configurés pour amener un ordinateur à exécuter les étapes consistant à :
a. fournir un gestionnaire de bus (710) configuré pour répondre aux requêtes d'allocation de mémoire (501) provenant d'un pilote de dispositif (702) en utilisant une représentation d'espace d'adresse abstraite de ladite mémoire d'ordinateur,
b. fournir un pilote de dispositif indépendant de la plate-forme (702) configuré pour générer des requêtes d'allocation de mémoire (502) en fonction de ladite représentation d'espace d'adresse abstraite de ladite mémoire,
c. générer une requête (502) d'allocation de mémoire provenant dudit pilote de dispositif audit gestionnaire de bus,
d. générer (804) une représentation de classe interne (708) dudit gestionnaire de bus en réponse à ladite requête générée,
e. vérifier l'identité dudit pilote de dispositif,
f. traiter ladite requête en utilisant ledit gestionnaire de bus de classe interne.

10. Support lisible par ordinateur selon la revendication 9, dans lequel lesdits dispositifs à code de programme lisible par ordinateur sont en outre configurés pour générer (804) une représentation de classe interne (708) dudit gestionnaire de bus (710).

11. Support lisible par ordinateur selon la revenclication 10, dans lequel ladite représentation de classe interne (708) est générée lorsque ladite requête (502) est effectuée dans ledit gestionnaire de bus (710), et ladite représentation de classe interne est affectée uniquement audit pilote de dispositif (702).

12. Support lisible par ordinateur selon la revendication 11, dans lequel ladite vérification est effectuée en localisant l'affectation dudit pilote de dispositif (702) audit gestionnaire de bus (710) sur une mémoire de base de données dans le système d'exploitation dudit ordinateur.

13. Signal de données informatiques sur une onde porteuse contenant des instructions exécutables par ordinateur pour allouer des ressources de mémoire dans un ordinateur, lesdites instructions étant configurées pour amener un ordinateur à exécuter les étapes consistant à :
a. fournir un gestionnaire de bus (710) configuré pour répondre aux requêtes d'allocation de mémoire (702) provenant d'un pilote de dispositif (702) en utilisant une représentation d'espace d'adresse abstraite de ladite mémoire d'ordinateur,
b. fournir un pilote de dispositif indépendant d'une plate-forme (702) configuré pour générer des requêtes d'allocation de mémoire (502) en fonction de ladite représentation d'espace d'adresse abstraite de ladite mémoire,
c. fournir une représentation de classe interne (708) dudit gestionnaire de bus configurée pour traiter des requêtes d'allocation de mémoire en provenance dudit pilote de dispositif,
d. générer une requête (502) d'allocation de mémoire dudit pilote de dispositif audit gestionnaire de bus,
e. générer (804) une représentation de classe interne dudit gestionnaire de bus en réponse à ladite requête générée,
f. vérifier l'identité dudit pilote de dispositif, et
g. traiter ladite requête en utilisant ledit gestionnaire de bus de classe interne.

14. Procédé pour allouer des ressources de mémoire dans un ordinateur, le procédé comportant les étapes consistant à :
a. fournir un gestionnaire de bus (710) configuré pour répondre aux requêtes (502) d'allocation de mémoire provenant d'un pilote de dispositif (702) en utilisant une représentation d'espace d'adresse abstraite de ladite mémoire d'ordinateur,
b. fournir un pilote de dispositif indépendant d'une plate-forme (702) configuré pour générer des requêtes d'allocation de mémoire en fonction de ladite représentation d'espace d'adresse abstraite de ladite mémoire,
c. générer (502) une requête d'allocation de mémoire dudit pilote de dispositif audit gestionnaire de bus,
d. générer (804) une représentation de classe interne (708) dudit gestionnaire de bus en réponse à ladite requête générée,
e. vérifier l'identité dudit pilote de dispositif, et
f. traiter ladite requête en utilisant ledit gestionnaire de bus de classe interne.

15. Procédé selon la revendication 14, comportant en outre l'étape consistant à générer (804) une représentation de classe interne (708) dudit gestionnaire de bus.

16. Procédé selon la revendication 15, dans lequel ladite représentation de classe interne (708) est générée lorsque ladite requête (502) est effectuée dans ledit gestionnaire de bus (710), et ladite représentation de classe interne est affectée uniquement audit pilote de dispositif (702).

17. Procédé selon la revendication 16, dans lequel ladite vérification est effectuée en localisant l'affectation dudit pilote de dispositif (702) dans ledit gestionnaire de bus (710) sur une mémoire de base de données dans le système d'exploitation dudit ordinateur.
